# EUROPEAN PATENT APPLICATION

(11) **EP 0 620 199 A2**
(43) Date of publication of application: **19.10.1994**
(21) Application number: 94302637.7
(22) Date of filing: 13.04.1994
(51) Int. Cl.: C03B 9/40

(54) **Modular section control for I.S. machine**

(30) Priority: 31.03.1994 US 218596; 15.04.1993 US 48141
(71) Applicant: Emhart Glass Machinery Investments Inc., Wilmington, Delaware 19801 (US)
(72) Inventor: Kingsbury, Charles M., Hartford, Connecticut 06040 (US); Borbone, Joseph A., Paxton, Massachusetts 01612 (US)
(74) Representative: Randall, John Walter

(57) **Abstract**

A section control is disclosed for an individual section of an I.S. machine. The control includes a manifold having a planar surface and a housing for a plurality of fluid flow control devices. The housing also has a planar surface. The housing is releasably mounted on the manifold with the planar surfaces in engagement and the devices are releasably secured to the housing. The housing includes inlet conduits communicating with the housing planar surface for supplying controlled fluid to each of the devices and a corresponding plurality of outlet conduits communicating with the housing planar surface for receiving controlled fluid from the devices. A corresponding plurality of inlet conduits in the manifold deliver controlled liquid to a corresponding one of the plurality of housing inlet conduits, and a corresponding plurality of outlet conduits in the manifold receive controlled liquid from a corresponding one of the plurality of housing outlet conduits.

## Description

The present invention relates to I.S. (individual section) machines which make glass containers from molten gobs of glass.

Each individual section of an I.S. machine has a blank side which forms a parison from the gob in a blank side mold and a blow side which forms the final glass container from the parison in a blow side mold. A number of movable mechanisms such as a blank side mold opening and closing mechanism, a plunger mechanism to be moved into a gob contained within the blank side mold, an invert mechanism for taking the formed parison and carrying it to the blow side, a blow side mold opening and closing mechanism, a takeout for removing the formed glass container from the blow side and depositing it on a dead plate and a pusher which will displace a bottle from the dead plate onto a conveyor are associated with each section. These mechanisms require air having a variety of pressures and lubrication which may require a continuous or intermittent supply of lubricating fluid.

A variety of fluid flow control devices are conventionally used to control the flow of air and lubricating fluids. Valves are one type of fluid flow control devices for blocking or permitting flow and/or controlling the rate of flow and metering devices such as LINCOLN lubrication injectors are another type of fluid flow control devices used on I.S. machines. Some mechanisms required the use of fluid flow control devices generally referred to as constant cushion devices.

It is an object of the present invention to provide an improved system for mounting such fluid flow control devices so that they can be more efficiently serviced.

This invention generally comprises a section control for an individual section of an I.S. machine having a plurality of sections comprising
a manifold having a planar surface,
a plurality of fluid flow control devices,
a housing for said plurality of fluid flow control devices, said housing having a planar surface,
means for releasably mounting said housing on said manifold with said planar surfaces in engagement,
means for securing said devices within said housing,
said housing including inlet conduit means communicating with said housing planar surface for supplying controlled fluid to each of said devices and a corresponding plurality of outlet conduit means communicating with said housing planar surface for receiving controlled fluid from said devices,
a corresponding plurality of inlet conduit means in said manifold for delivering controlled liquid to a corresponding one of said plurality of housing inlet conduit means, and
a corresponding plurality of outlet conduit means in said manifold for receiving controlled liquid from a corresponding one of said plurality of housing outlet conduit means.

Other objects and advantages of the present invention will become apparent from the following portion of this specification and from the accompanying drawings which illustrate in accordance with the mandate of the patent statutes a presently preferred embodiment incorporating the principles of the invention.

Referring to the drawings:
Figure 1 is a schematic illustration of the valve block assembly made in accordance with the teachings of the present invention connected to an individual section of an I.S. machine;
Figure 2 is a front view of the valve block manifold;
Figure 3 is a view taken at 3-3 of Figure 2;
Figure 4 is a view taken at 4-4 of Figure 2;
Figure 5 is a view taken at 5-5 of Figure 2;
Figure 6 is a rear view of a portion of one of the valve blocks which will engage the manifold;
Figure 7 is a view taken at 7-7 of Figure 6;
Figure 8 is an oblique view of one end of a valve cartridge used in the valve block;
Figure 9 is a view taken at 9-9 of Figure 7;
Figure 10 is a view taken at 10-10 of Figure 7;
Figure 11 is a view taken at 11-11 of Figure 7; and
Figure 12 is a front view of the electronics console and the valve blocks;
Figure 13 is a front view of a transfer block mounted on to a manifold;
Figure 14 is a bottom view of the structure shown in Figure 13;
Figure 15 is a front view of a constant cushion control block which is to be mounted on the transfer block;
Figure 16 is a top view of the constant cushion control block;
Figure 17 shows the constant cushion control block mounted on the electronic valve block assembly manifold, with internal supply and return passages.
Figure 18 is an elevational view of a Lincoln lube injector manifold secured to the section manifold;
Figure 19 is an oblique view of the two adaptors that secure a Lincoln lube device to the manifold; and
Figure 20 is a front view of the Lincoln lube manifold shown in Figure 18.

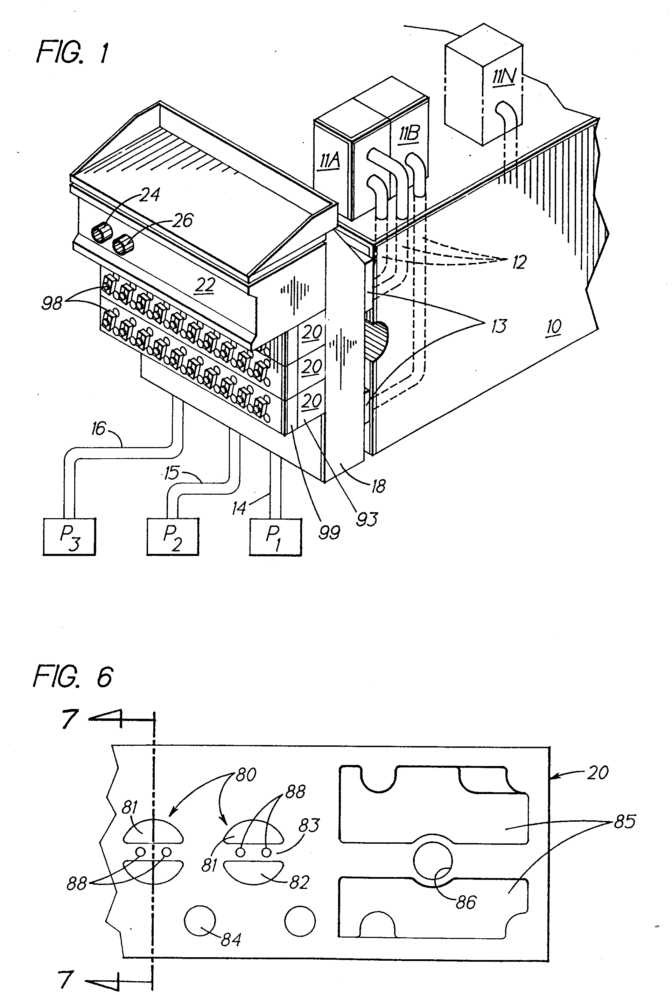

Figure 1 is a schematic showing of a portion of one of the plurality (6,8,10,12, for example) of sections of an I.S. machine. The section box 10 supports a number of air operated mechanisms 11A, 11B...11N such as an invert, takeout, mold opening and closing mechanism, etc. which have to be repeatedly displaced. U.S. Patent No. 4,362,544 describes in detail these mechanisms. The air lines 12 for these mechanisms may be connected to one or more "KISS" plates 13.

High pressure P1, low pressure P2 and pilot air P3 are supplied through pipes 14, 15, 16 (controlled by suitable shut-off valves - not shown) to a manifold 18 and from the manifold to the valve blocks 20. This high and low pressure air is selectively redirected back to the manifold where it is directed through passages in the manifold to associated passages in the kiss plates and into the frame conduits 12. While in the preferred embodiment, the manifold surface engages the surface of the kiss plates at one side of the kiss plates and discrete air lines are connected to the other side of the kiss plate, the kiss plates could be eliminated and the discrete air lines could be connected directly to the conduits 70 of the manifold. As shown, one mechanism 11A has two air lines and no valve at the mechanism. Two three way valves in the valve block would be used to operate the cylinder, whereas mechanism 11B has only one air line and could, for example, include a pilot operated valve with either low pressure or high pressure air serving as this pilot air. A console 22 may be located above the valve blocks and houses the electronics for controlling the solenoid valves. A machine stop button 24 and associated machine stop light 26 may be located on the front of the console.

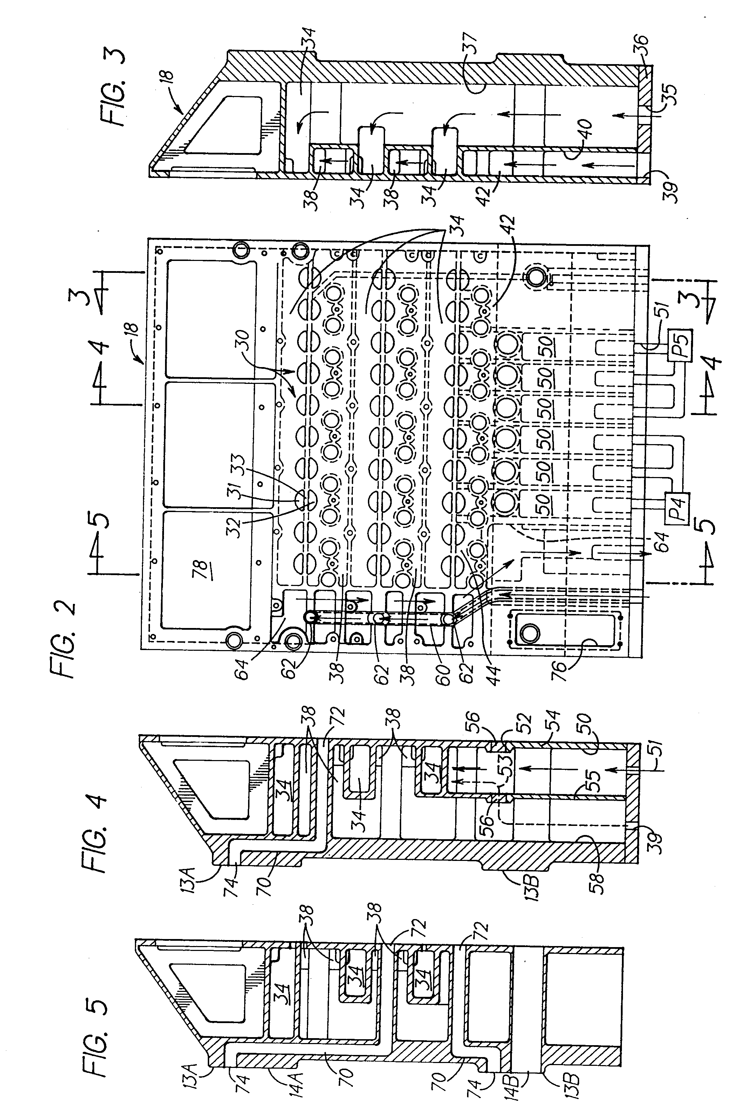

Figure 2 is a front view of the manifold showing the surface on which the valve blocks are to be mounted. The embodiment shown has, but is not limited to, three rows of ten valves. For example, four rows of eight or ten valves could also be shown. As can be seen, there are three horizontal rows of ten exit apertures 30 each having upper 31 and lower 32 semi circular segments separated by a divider 33. The upper exit apertures 31 of each row communicate with a horizontally extending internal chamber 34 which is supplied with high pressure air. Figure 3 shows how high pressure air is fed through an opening 35 in the base 36 into a vertically extending channel 37 which communicates with these high pressure chambers 34.

The lower exit apertures 32 of the upper two rows communicate with horizontally extending internal chambers 38 which are supplied with low pressure air. Figure 3 also shows how low pressure air is fed through a base opening 39 into a vertically extending channel 40 which communicates with these low pressure chambers 38. This vertical low pressure channel 40 also communicates with a horizontally extending chamber 42 which communicates with the two low pressure exit apertures on the right hand end of the lowermost row. A separate chamber 44 communicates with the lower exit apertures of the two left hand apertures in the lowermost row and this chamber also is in communication with the low pressure vertical channel 40.

Referring to Figures 2 and 4, the lower exit aperture of each of the central six apertures of the lowermost row communicates with its own vertical channel 50. These channels have normally open openings 51 at the bottom and a pair of aligned holes 52, 53 in the front 54 and rear 55 channel walls. By plugging 56 both aligned holes of these six vertical channels and by connecting these channels through the opening 51 at the bottom to an independent pressure source, these channels can be connected to a pressure source having a pressure other than high and low pressure. These inlets 51 can accordingly be connected to unique pressures such as plunger up pressures P4-1, P4-2, P4-3 or counterblow pressures P5-1, P5-2, P5-3. In the illustrated embodiment which is to control a triple gob machine, six special conduits are provided for the three plunger up lines and the three counterblow lines. Should special pressures not be required, the bottom holes 51 to these six (or any of them) can be plugged and the plugs in the rear walls 55 can be removed (access by removing the plug in the front wall) so that low pressure air from a chamber 58 which is located behind these channels 50 and which communicates with the low pressure vertical channel 40, will enter these individual chambers 50 to supply the lower apertures with low pressure air. Pilot air (P3) is supplied to the valve blocks through passage 60 having an exit port 62 for each block and exhaust air exhausted from each block will be exhausted through a vertical exhaust channel 64.

For every exit aperture 30 in the manifold there is a conduit 70 (Figures 4 and 5) having an aperture 72 communicating with the front surface of the manifold and an aperture 74 communicating with one of the rear surfaces 13A, 13B of the manifold that will engage a kiss plate 13 as shown or directly communicate with conduits 12. The manifold (Figure 2) also has an opening 76 at the bottom front left which will receive an electronic receptacle with the cable passing through a channel in the manifold up to the top chamber 78 so that the cable can be fed into the console through an opening at the rear of the console. Gaskets located between the mating surfaces of the kiss plates and the manifold and between the manifold and the valve blocks will effect the desired air tight seals.

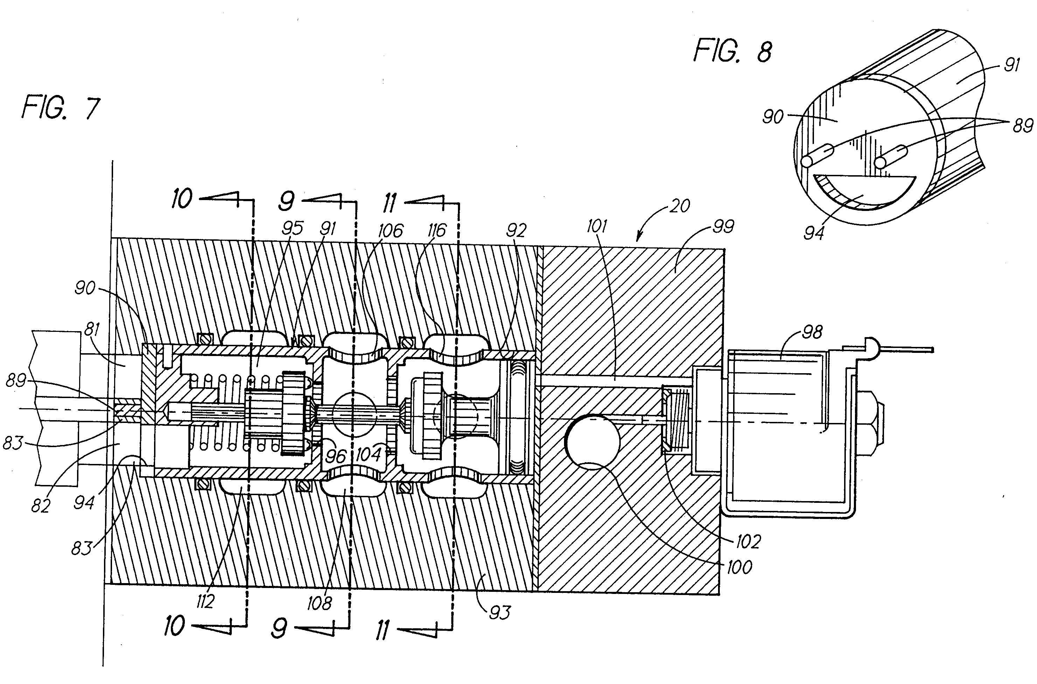

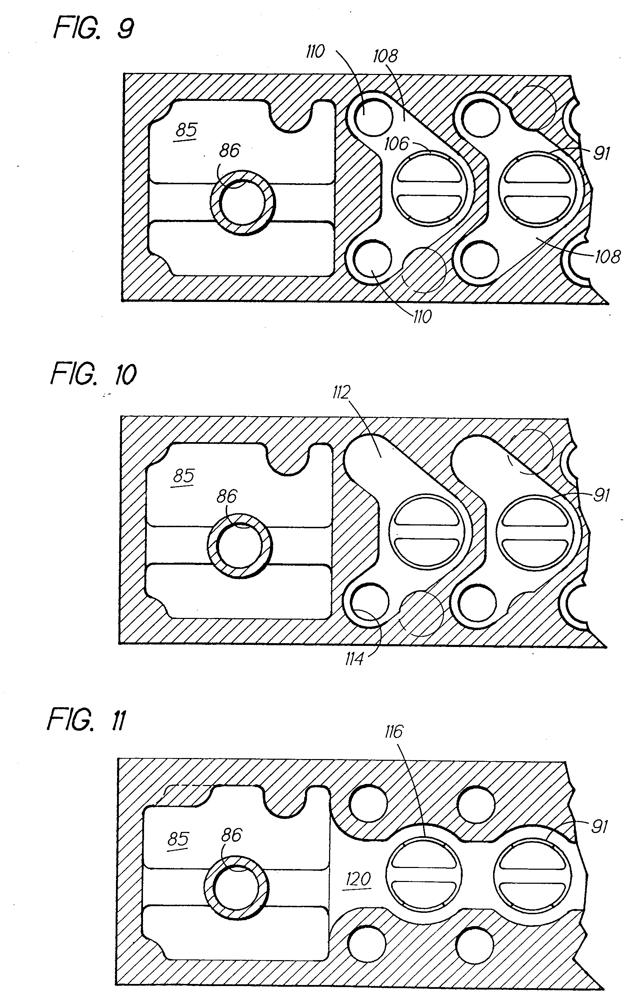

Associated with each row of ten exit apertures 30 is a valve block 20 having corresponding inlet apertures. As can be seen from Figure 6, which views a portion of the rear face of the valve block 20 which is to engage the manifold, each valve block includes inlet apertures 80 having upper 81 and lower 82 semi circular segments separated by a divider 83, an inlet exit aperture 84, an exhaust channel 85 and a pilot bore 86 which will communicate respectively with the matched exit apertures 30, inlet/exit aperture 72, pilot exit port 62 and exhaust channel 64 of the manifold. The divider has two through holes 88 which receive end pins 89 secured to the resilient end cap 90 of the cylindrical sleeve 91 of a cartridge valve (Figures 7 and 8). The sleeve is received by a suitable blind bore 92 in the valve block body 93 of a valve block 20. The valve sleeve 91 can be oriented with the inlet aperture 94, which is a circular segment matching a circular segment 81, 82 of the inlet aperture 80 of the block, either in communication with the low pressure inlet aperture 82 as shown or the cartridge can be rotated 180° with the pins 89 again inserted into the divider holes 88 to locate this inlet aperture 94 in communication with the high pressure inlet aperture 81. A chamber is accordingly defined including the aperture 94 in the end cap 90, the aligned hole 81 or 82 in the valve block and an internal cavity 95 in the sleeve 91. The cartridge valve will accordingly supply either high or low pressure air to a supply port 96 which is controlled by a solenoid 98 which is mounted on the solenoid mounting block portion 99 of the valve block. The solenoid mounting block portion clamps the cartridge valve within the blind bore 92 and hence, forces the resilient end cap 90 against the end of the blind bore to seal the operative inlet opening 81 or 82. The pilot air bore 86 extends through the valve block body and communicates with a pilot air line 100 in the solenoid mounting block portion which communicates with an air line 101 communicating with each cartridge valve via a solenoid 98 controlled seal 102. Should the illustrated pilot operated solenoids be replaced with solenoids not requiring pilot air, these pilot air lines could be eliminated. When the solenoid is off, the cartridge valve supply port 96 is closed and the cartridge valve exhaust port 104 is open. When the solenoid is operated the solenoid armature moves the seal to allow pilot air to operate the cartridge valve. When the solenoid is on, the valve element 105 is axially displaced from the illustrated position to its second position where the exit port 104 is closed and the supply port 96 is open. Pressurized air then passes through the supply port 96 and through sleeve apertures 106 into a kidney shaped chamber 108 (see also Figure 9) where it can flow through parallel conduits 110 into another kidney shaped chamber 112 (see Figure 10) which surrounds the sleeve, leaving that chamber through a conduit 114 which is in communication with an associated manifold conduit 70. Optionally, the valve as used might be a normally open valve. Flow through these parallel conduits 110 can be controlled in a conventional manner with the use of full or half plugs and meter in or out check valves in one of these conduits and the selective use of a half plug or a needle valve, where required, in the other conduit. Additional details are disclosed in copending serial no. 08/048,141 filed April 15, 1993.

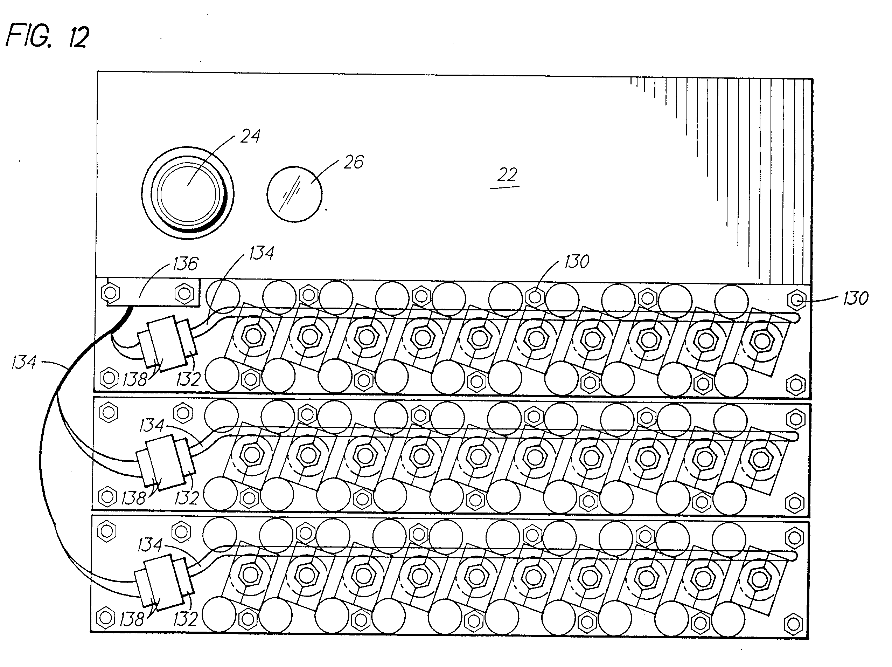

When the solenoid is off exhaust air will proceed from the mechanism 11A, etc. through the manifold conduit 70, through the conduit 114 of the valve block into the first kidney shaped chamber 112, then through one or both of the parallel conduits 110 into the second kidney shaped chamber 108, through one set of sleeve holes 106 into the sleeve 91, through the exit port 104 of the cartridge valve, through a set of exit apertures 116 in the sleeve to a channel 120 (Figure 11) which communicates with the exhaust channel 85.

Referring to Figure 12, each valve block can be quickly and easily replaced with an identically configured valve block in the event a failure occurs by closing the shut-off valves to isolate the valve block. Each valve block is secured to the manifold with bolts 130 so that mechanical separation is quick and simple. For purposes of this disclosure, the valve blocks 20 are secured for quick release from the permanent part of the section, i.e., the frame which includes the section box 10, the kiss plates 13 and the manifold 18. The solenoids for each block may be wired from a receptacle 132 secured to the block wiring harness 134. Electrical connection to the console may be effected with a single quick release coupling 136 which can be released from the console and the three individual couplings 138 can be quickly released from the three valve block receptacles 132. By removing the coupling 138 from the valve block to be removed and the console coupling 136 in the event the upper valve block is to be removed, any valve block can be removed (and replaced) quickly and simply.

As a result, the individual fluid flow control devices, here valves, can not be individually accessed for servicing (repair or replacement). The entire valve block will be removed, and ideally, replaced with an identically configured valve block so that down time is greatly reduced. The removed valve block can then be serviced remote from the machine and made ready for future use as a replacement valve block.

The I.S. machine has a number of identical sections, each of which has blowhead, invert, takeout and baffle mechanisms requiring constant cushioning. Conventionally, all of these mechanisms are individually supplied with oil under pressure via conduits that originate at a suitable manifold which is secured to one of the machine side supports. Regulation of the supplied pressure for a mechanism occurs at the manifold which is far removed from the mechanism. The takeout and baffle lines run along the overhead machine support while the invert and blowhead lines run at the bed level.

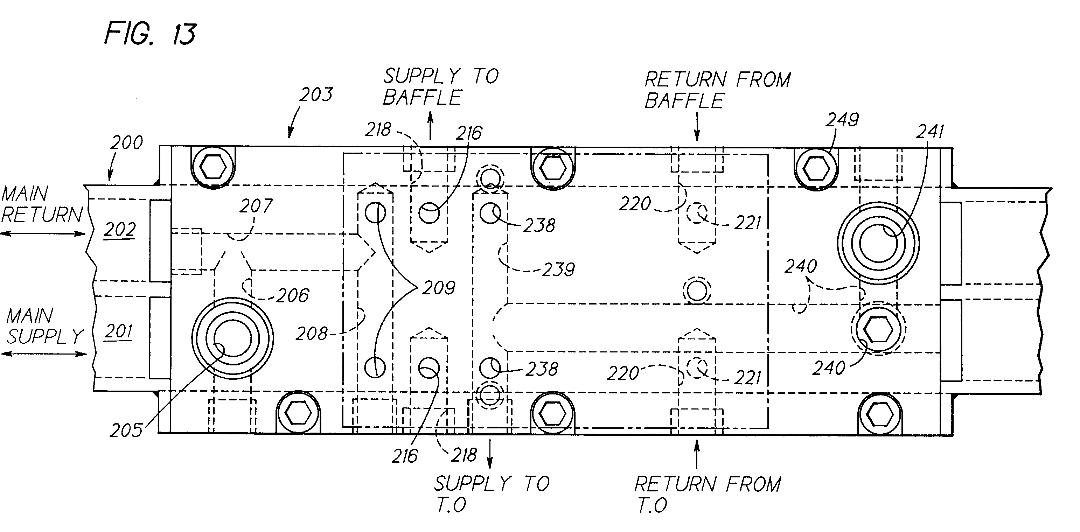

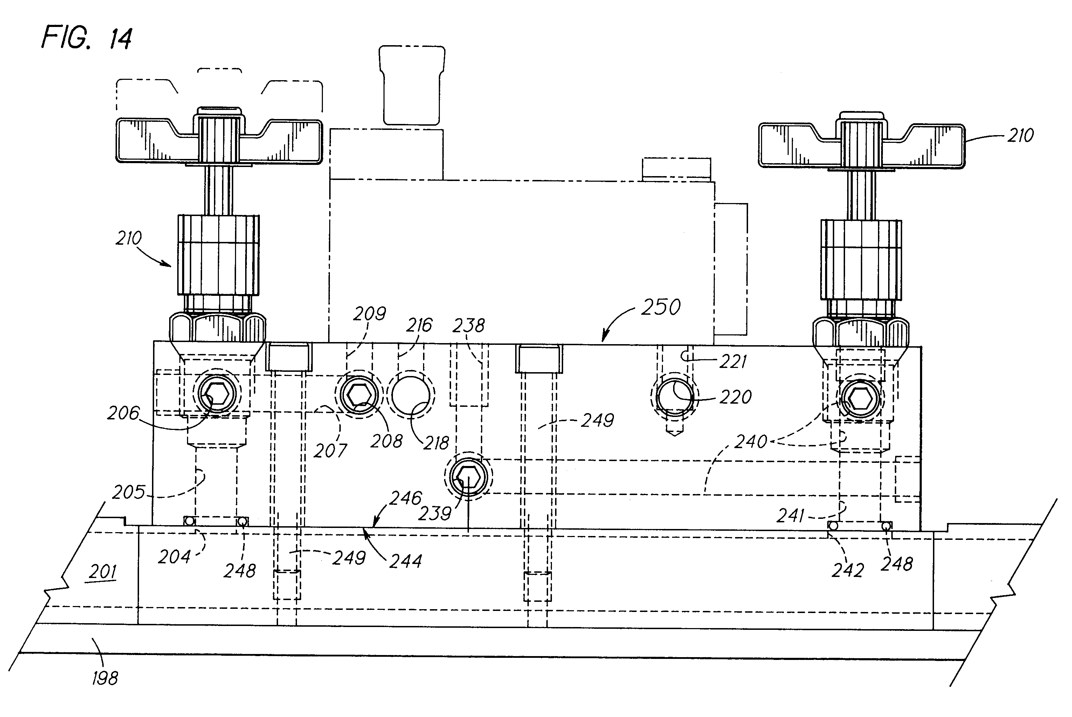

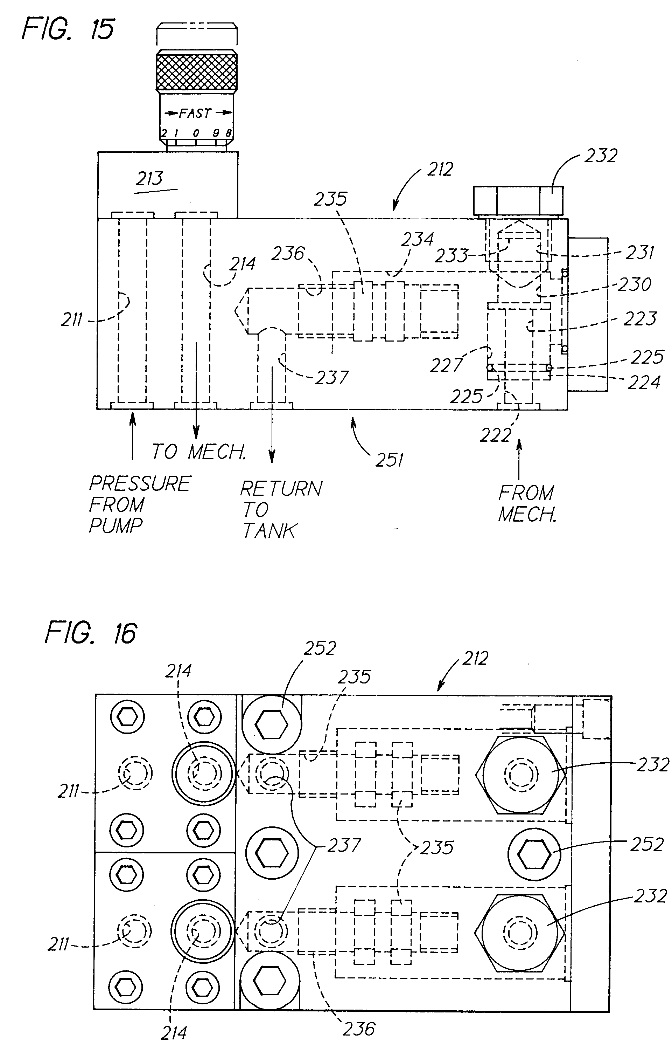

As shown in Figures 13 and 14, oil under pressure is supplied both across the top of the I.S. machine through a manifold 200 made up of a main supply 201 and main return 202 square tubing which is secured to the cross beam 198 of the I.S. machine. At each section a transfer block 203 is directly secured to the manifold. The pressurized oil exits through a hole 204 in the main supply 201, enters a transfer block 203 through an inlet conduit 205, flows through feeder 206 and intermediate 207 conduits, to a cross conduit 208 and leaves the transfer block through a pair of parallel spaced exit conduits 209. Flow of oil from the inlet conduit 205 to the feeder conduit 206 is controlled by a shutoff valve 210. The exiting oil enters in-line inlet conduits 211 (Figures 15, 16) of a two circuit constant cushion module 212, passes through a pair of needle valves 213 and exits the constant cushion module through a pair of parallel, spaced exit conduits 214 which communicate with in-line feed conduits 216 feeding supply conduits 218, communicating with the outer surface of the transfer block where connection will be made to supply the oil to the baffle and takeout.

The oil returns to the transfer block, via suitable connections, to the return inlet conduits 220, and out from the transfer block via exit return conduits 221 into return conduits 222 in the constant cushion control block and through central bores 223 in cylindrical filter supports 224 each of which has an annular groove 225 which supports an "O" ring 226 for sealing the filter support to the surface 227 of the housing bore in which it sits. Cylindrical filter screens 230 sit on the end of the filter supports 224 and the other ends are received within the internal cylindrical bores 231 of the locking bolts 232. A seal is maintained by "O" rings 233 compressed between the ends of the filters and the ends of the locking bolt bores. Oil passes through the filters 230 into central bores 234 through pressure relief valves 235 which are screwed into threaded intermediate bores 236, through the intermediate bores to exit bores 237. The oil continues its flow through in-line bores 238 in the transfer block, through cross 239 and intermediate 240 bores and out an exit passage 241 after passing through a second shut-off valve 210. This oil then passes through an opening 242 in the main return into the main return channel 202.

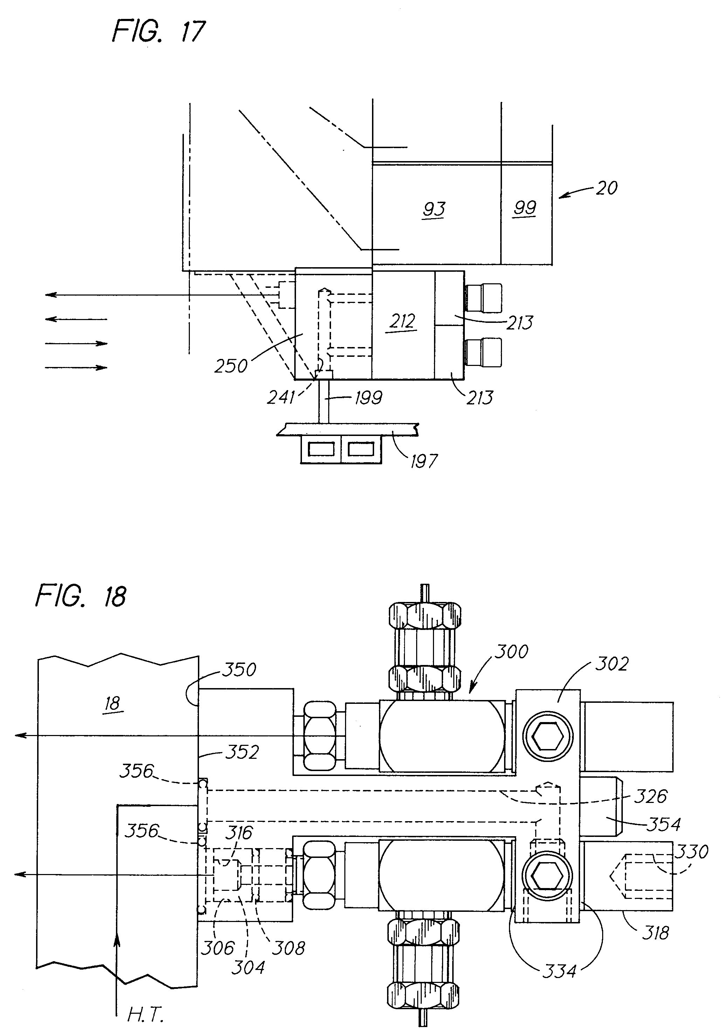

All flow between the main return and main supply and the transfer block occurs at opposed flat surfaces 244, 246 with seals established with "O" rings 248 compressed as the transfer block is secured to the manifold by suitable fasteners 249. Similarly, all flow between the transfer block and the constant cushion control block occurs at opposed flat surfaces 250, 251 with seals established with "O" rings 248 compressed as the constant cushion control block is secured to the transfer block with suitable fasteners 252. When oil is supplied across the bed of the I.S. machine through a manifold 200, which is secured to the cross rails 197 of the I.S. machine frame, the transfer block 203 may be connected to the manifold via suitable piping 199 (Figure 17). When the transfer block is used in an I.S. machine that does not have a valve block manifold as shown in Figures 13 and 14, the transfer block can be either directly coupled to the manifold, as done in the overhead application, or it can be mounted on the section frame and connected via piping to the manifold.

With supply and return valves closed, the constant cushion control block can easily be removed for repair, etc. while allowing other machine sections to continue running. Removal of four fasteners 252, allows removal and replacement of the constant cushion control block.

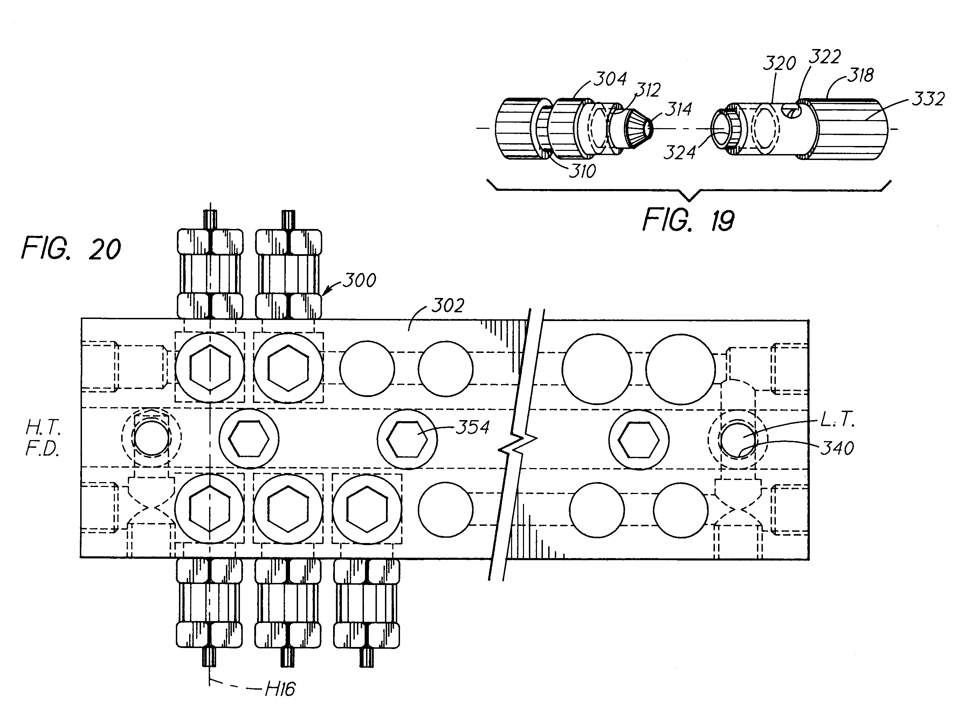

Many section mechanisms require periodic lubrication as can be accomplished with Lincoln lube devices. As shown in Figures 18 and 20, a plurality (as many as 48, for example) of Lincoln lube devices 300 are mounted on a supporting I beam 302. A back side adaptor 304 is slidably positioned within a back side I beam bore 306 and is sealed relative to that bore via an "O" ring 308 which is located within an annular groove 310 in the adaptor. The adaptor has a bore 312 extending axially through it which is threaded 314 at the front end to receive the threaded back end of a Lincoln lube device (a socket 316 is present on the adaptor for this purpose). A cylindrical front side adaptor 318 has a reduced diameter portion 320 which has a cross bore 322 communicating with a central blind bore 324 opening at the front end of the Lincoln lube device. This reduced diameter portion is smaller than the I beam thru-hole in which it is located so that lubricant delivered through passage 326 will flow around the reduced diameter portion 320, into the cross bore 322, through the central bore 324 and into the Lincoln lube device (the front end of the central bore is threaded to receive the threaded front end of the Lincoln lube device - the front adaptor has a socket 330 for this purpose). The front end 332 of the front side adaptor is enlarged as is the front end of the Lincoln lube device so that copper washers 334 can be compressively located between the front side adaptor and the I beam and between the Lincoln lube device and the I beam to effect the desired seal.

The section manifold delivers oil for high temperature (H.T.) operation to passage 326 which supplies a number of Lincoln lube devices and delivers oil for low temperature (L.T.) operation through another passage 340 that, like passage 326, communicates with the front surface of the section and delivers the oil to the rest of the Lincoln lube devices. In the event that oil for high temperature (H.T.) operation is not required by the section mechanisms, both passages 326 and 340 can deliver low temperature oil to all injectors. The back end 350 of the I beam matingly engages the front surface 352 of the section manifold 18 and the I beam is secured to the section manifold with suitable screws 354 so that seals can be established with captured "O" rings 356. The section manifold delivers the output of each Lincoln lube device to a rear surface where piping connections can be made to individual mechanisms. To make repairs, etc. the lubricant supplies can be turned off and the manifold removed by releasing the screws. A fully operational manifold can then be installed in its place to minimize section down time with repairs taking place away from the machine and also allows other sections to remain in operation.

## Claims

1. A section control for an individual section of an I.S. machine having a plurality of sections comprising
a manifold having a planar surface,
a plurality of fluid flow control devices,
a housing for said plurality of fluid flow control devices, said housing having a planar surface,
means for releasably mounting said housing on said manifold with said planar surfaces in engagement,
means for securing said devices within said housing,
said housing including inlet conduit means communicating with said housing planar surface for supplying controlled fluid to each of said devices and a corresponding plurality of outlet conduit means communicating with said housing planar surface for receiving controlled fluid from said devices,
a corresponding plurality of inlet conduit means in said manifold for delivering controlled liquid to a corresponding one of said plurality of housing inlet conduit means, and
a corresponding plurality of outlet conduit means in said manifold for receiving controlled liquid from a corresponding one of said plurality of housing outlet conduit means.

2. A section control according to claim 1, wherein said plurality of fluid flow control devices are pneumatic valves.

3. A section control according to claim 1, wherein said housing is selectively configured to prevent the individual removal of a housed fluid flow control device when said housing is mounted on said manifold.

4. A section control according to claim 1, wherein said plurality of fluid flow control devices are Lincoln lube devices.

5. A section control according to claim 1, wherein said plurality of fluid flow control devices are constant cushion control blocks.

6. A section control according to claim 1, wherein said manifold comprises a transfer block.
